# FASCICULE DE BREVET EUROPEEN

(11) **EP 3 851 731 B1**
(45) Date de publication et mention de la délivrance du brevet: **10.04.2024**
(21) Numéro de dépôt: 20212411.1
(22) Date de dépôt: 08.12.2020
(51) Int. Cl.: F17C 13/02

(54) **STATION ET UN PROCÉDÉ DE REMPLISSAGE DE RÉSERVOIR(S)**
STATION UND VERFAHREN ZUM FÜLLEN VON BEHÄLTERN
STATION AND METHOD FOR FILLING TANK(S)

(30) Priorité: 20.01.2020 FR 2000503
(43) Date de publication de la demande: 21.07.2021
(73) Titulaire: L'Air Liquide, société anonyme pour l'Étude et l'Exploitation des procédés Georges Claude, 75007 Paris (FR)
(72) Inventeur: ALLIDIERES, Laurent, 75321 PARIS (FR); WEBER, Mathilde, 75321 PARIS (FR); WERLEN, Etienne, 78350 LES LOGES-EN-JOSAS (FR)
(74) Mandataire: Air Liquide

(56) Documents cités:
- EP-A2- 2 212 614
- EP-A2- 2 375 121
- FR-A1- 3 032 257
- FR-A1- 3 060 550

## Description

L'invention concerne une station et un procédé de remplissage de réservoir(s) .

L'invention concerne plus particulièrement une station de remplissage de réservoir(s) avec du gaz sous pression, notamment de l'hydrogène sous pression, comprenant au moins deux stockages source de gaz sous pression, une conduite de transfert ayant une extrémité amont reliée en parallèle aux stockages sources et une extrémité aval destinée à être reliée à un réservoir à remplir, la station comprenant un ensemble de vanne pour contrôler le transfert de gaz entre les sources et le réservoir à remplir et un contrôleur électronique relié l'ensemble de vannes et configuré pour commander l'ensemble de vannes, le contrôleur électronique étant configuré pour réaliser des transferts de gaz successifs entre les stockages sources et le réservoir à remplir via des équilibrages de pression successifs. Cf FR 3060550 A1. Le remplissage rapide (typiquement en moins de 15 minutes) de réservoirs de gaz à haute pression embarquées à bord de véhicules à pile à combustible est réalisé essentiellement par des équilibrages de pressions successifs entre des capacités ou stockages source à haute pression (200, 300, 450, 700, 850 ou 1000 bar par exemple) et le réservoir embarqué. Ces méthodes dites de remplissage « par cascade » sont abondamment décrites dans la littérature.

Lorsque les stockages source sources sont dépressurisés, ils subissent une baisse de température (due à la détente isentropique du gaz en leur sein). Dans le cas de remplissages successifs de réservoirs, la dépressurisation successive des stockages source peut entraîner une chute de température sous la température minimale de sécurité du réservoir. Ceci peut entraîner une fragilisation du réservoir et potentiellement une fuite d'hydrogène.

Ce phénomène est particulièrement sensible pour les stockages source composites. Ces derniers sont particulièrement utilisés dans les stations sans compresseur, où ces réservoirs sont intégrés dans des cadres, sur des châssis mobiles de type semi-remorque ou CGEM (Conteneur à Gaz à Éléments Multiple). De plus, en cas de dépressurisation trop rapide, et à trop basse pression, les enveloppes étanches internes (liners) plastiques de ces stockages composites peuvent se déformer sous l'effet de la dépressurisation (« liner collapse » affaissement du liner). Une trop forte déformation peut causer une fuite.

Un but de la présente invention est de pallier tout ou partie des inconvénients de l'art antérieur relevés ci-dessus.

A cette fin, la station selon l'invention, par ailleurs conforme à la définition générique qu'en donne le préambule ci-dessus, est essentiellement caractérisée en ce que le contrôleur électronique est configuré pour déterminer la température atteinte par le gaz dans les stockages source ou par les stockages source au cours des transferts de gaz et, lorsque ladite température atteinte est inférieure à seuil déterminé, pour empêcher ou interrompre ce transfert de gaz ou pour réduire le débit de gaz transféré lors dudit transfert.

Par ailleurs, des modes de réalisation de l'invention peuvent comporter l'une ou plusieurs des caractéristiques suivantes :
- la station comprend un ensemble de capteurs de mesure de la température du gaz dans les stockages source, le contrôleur électronique étant configuré pour déterminer la température atteinte par le gaz des stockages source ou par les stockage source au cours des transferts à partir des valeurs mesurées par les capteurs de mesure de la température,
- la station comprend un ensemble de capteurs de mesure de la pression du gaz dans les stockages source, le contrôleur électronique est configuré pour déterminer la température atteinte par le gaz dans les stockages source ou par les stockages source au cours des transferts à partir des valeurs mesurées par les capteurs de mesure de la pression,
- la station comprend un capteur de mesure de la température ambiante, le contrôleur électronique étant configuré pour déterminer la température atteinte par le gaz dans les stockages source ou dans les stockages source au cours des transferts à partir de la valeur mesurée par le capteur de mesure de la température ambiante,
- le contrôleur électronique est configuré pour déterminer le débit de gaz transféré au cours des transferts et pour déterminer la température atteinte par le gaz dans les stockages source ou par les stockages source au cours des transferts à partir de ladite valeur de débit,
- le contrôleur électronique comprend une mémoire stockant un ensemble de table(s) ou abaques de références de conditions de transfert de gaz, le contrôleur électronique étant configuré pour déterminer la température atteinte par le gaz dans les stockages source ou par les stockage source au cours des transferts à partir des tables de références et des conditions de transfert de gaz courantes,
- le contrôleur électronique est configuré pour estimer la température atteinte par le gaz dans les stockages source ou par les stockages source au cours des transferts à partir d'un modèle de calcul réalisant, avant et/ou au cours d'un transfert, un bilan de masse et d'enthalpie appliqué au gaz dans le stockage source et d'un bilan d'échange d'énergie dans la paroi du stockage source avec l'équation d'état du gaz : équation des gaz parfaits ou réels, et d'un bilan des échanges thermiques entre la paroi du stockage source et l'extérieur du stockage source.

L'invention concerne également un procédé de remplissage de réservoir(s) avec du gaz sous pression, notamment de l'hydrogène sous pression, au moyen d'une station comprenant au moins deux stockages source de gaz sous pression, une conduite de transfert ayant une extrémité amont reliée en parallèle aux stockages sources et une extrémité aval destinée à être reliée à un réservoir à remplir, le procédé comprenant des étapes successives de transfert de gaz entre les stockages sources et le réservoir par équilibrages de pression, le procédé comprenant une étape de détermination de température atteinte par le gaz dans les stockages source ou par les stockages source au cours des transferts de gaz, une étape de comparaison de cette température atteinte avec un seuil déterminé et une étape d'empêchement ou d'interruption de ce transfert ou une étape de réduction du débit de gaz transféré lorsque ladite température atteinte est inférieure audit seuil.

Selon d'autres particularités possibles :
- le procédé comporte une étape de mesure de la température et/ou de la pression du gaz dans les stockages source avant et/ou en cours de transfert de gaz et une étape de calcul de la température atteinte au cours du transfert à partir de la valeur mesurée de la température, respectivement de la pression,
- le procédé comporte une étape de mesure de la température ambiante avant le transfert de gaz et une étape de calcul de la température atteinte au cours du transfert à partir de la valeur mesurée de la température ambiante,
- l'étape de détermination de température est réalisée avant ou en début de transfert de gaz, cette étape de détermination déterminant de façon prédictive le moment du transfert de gaz au cours duquel ladite température atteint le cas échéant ledit seuil,
- lors des transferts de gaz, la température atteinte par le gaz dans les stockage source ou par les stockages source au cours des transferts diminue, le procédé comprenant, avant que cette température arrive au seuil, une étape d'interruption du transfert de gaz à partir du stockage source concerné et une étape de transfert de gaz à partir d'un autre stockage source,
- l'étape de détermination de température est réalisée avant le transfert de gaz à partir d'un premier stockage source et en ce que, après l'étape de détermination de température, le procédé comprend une étape de détermination de la première quantité de gaz transférée par le premier stockage source vers le réservoir à remplir jusqu'au moment où la température déterminée atteint le seuil, lorsque cette première quantité de gaz est inférieure à une quantité déterminée, le procédé comprenant une étape changement de stockage source pour transférer du gaz via un second stockage source, c'est-à-dire sans utiliser le premier stockage source pour transférer du gaz. L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :

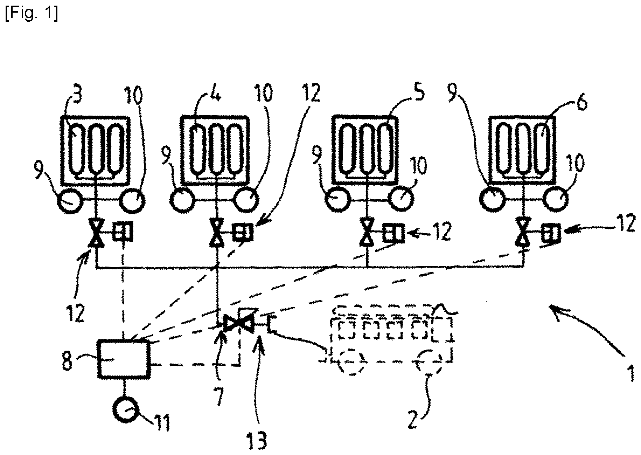

[Fig. 1] représente une vue schématique et partielle illustrant un exemple de structure et de fonctionnement d'une station de remplissage selon l'invention,
[Fig. 2] représente une vue schématique et partielle illustrant un exemple de fonctionnement d'une station de remplissage selon l'invention.

La station 1 illustrée comprend une conduite de transfert 7 ayant une extrémité amont reliée en parallèle à quatre stockages source 3, 4, 5, 6 de gaz sous pression. La conduite 7 de transfert comprend une extrémité aval destinée à être reliée à un réservoir 2 à remplir. Bien entendu il pourrait être envisagé plusieurs extrémités aval en parallèles pour le remplissage simultané de plusieurs réservoirs 2. De même, le nombre de stockages source peut être moindre ou plus élevé et le cas échéant suppléé par d'autres sources de gaz sous pression.

La station 1 comprend un ensemble de vannes pour contrôler le transfert de gaz entre les sources et le réservoir 2 à remplir. Par exemple au moins une vanne 12 (de préférence pilotée) peut être prévue à la sortie de chaque stockage source. Dans le cas où un stockage source est constitué de plusieurs conteneurs distincts montés en parallèle, chacun des conteneurs peut être muni d'une vanne d'isolement propre (par exemple commandée). De même, avant l'extrémité aval, la conduite 7 de transfert peut comporter au moins une vanne 13, notamment une vanne de régulation de pression et/ou de débit.

La station comprend en outre un contrôleur 8 électronique relié l'ensemble de vannes et configuré pour commander l'ensemble de vannes. Le contrôleur 8 électronique peut comprendre un ordinateur et/ou un microprocesseur. Le contrôleur 8 électronique est configuré, c'est-à-dire programmé et/ou piloté, pour réaliser des transferts de gaz successifs entre les stockages sources 3, 4, 5, 6 et le réservoir 2 à remplir via des équilibrages de pression successifs. C'est-à-dire que le contrôleur 8 est apte et prévu pour réaliser des remplissages par des équilibrages en cascade. Bien entendu, la station pourrait comporter d'autres sources additionnels (stockage de gaz liquéfié associé à un vaporiseur par exemple et/ou un compresseur).

Par exemple, le gaz peut être comprimé à partir d'une source basse pression (cadre, semi-remorque 200 bar, électrolyseur...) vers des stockages source à haute pression (typiquement entre 450 et 1000 bar). Les transferts de gaz sont réalisés entre les stockages sources et les réservoirs 2) à remplir par équilibrage passif.

Le remplissage des réservoirs 2 peut être réalisé directement à partir des conteneurs montés sur des semi-remorques. Le remplissage de type cascade réalise des équilibrages successifs en commençant par les stockages sources de pression les plus basses puis en utilisant des stockages source de pression de plus en plus élevées. Lorsque la pression est égale ou sensiblement égale entre le stockage source courant et le réservoir (et/ou lorsque le débit de gaz transféré devient inférieur à un seuil), le transfert est interrompu et un autre stockage source de pression plus élevée est utilisé.

Selon une particularité avantageuse, le contrôleur 8 électronique est configuré pour déterminer la température atteinte par le gaz dans les stockages 3, 4, 5, 6 source ou par les stockages source 3, 4, 5, 6 au cours des transferts de gaz et, lorsque ladite température atteinte est inférieure à seuil déterminé, pour empêcher ou interrompre ce transfert ou pour réduire le débit de gaz transféré lors dudit transfert.

Par exemple, le contrôleur 8 électronique utilise un module prédictif de calcul de pression et température en fin de séquence d'équilibrage permettant de calculer, de façon prédictive, si la température dans le réservoirs source sera inférieure à la température de sécurité minimale admise par le stockage source. Si c'est le cas, l'équilibrage peut être stoppé avant sa fin et/ou peut être annulé au profit d'un autre équilibrage (le suivant qui était prévu). Alternativement ou cumulativement, le débit de transfert de gaz entre le stockage source et le réservoir 2 peut être modifié, c'est-à-dire diminué pour diminuer le refroidissement au sein du stockage source. Ce débit réduit peut par exemple être un débit maximum déterminé par des essais préalables permettant de diminuer ou de supprimer le risque d'endommagement du réservoir.

Cette estimation prédictive peut être basée par exemple sur des essais de soutirage de gaz d'un stockage à différents débits, avec une mesure de la température, permettant de construire des abaques ou tableaux de référence. Ces essais peuvent être associés à des inspections visuelles (notamment interne) des stockages source, de la tomographie ou tout autre méthode de contrôle de l'endommagement de l'enveloppe (polymère, liner) permettant de vérifier les conditions d'apparition de l'endommagement (déformation du liner, fissuration, ...) et d'établir un abaque.

Alternativement et/ou cumulativement cette prédiction peut être basée sur des routines d'intelligence artificielle (apprentissage machine par exemple basées sur des essais).

Ainsi, en connaissant les conditions courantes (température, et/ou pression et/ou débit) et le type de stockage source, le contrôleur 8 électronique peut déterminer à l'avance la température qui sera atteinte au cours du transfert de gaz (courbe de température en fonction du temps par exemple). Alternativement, la détermination de cette température au cours du transfert de gaz peut être donnée par un modèle de calcul de la littérature. Par exemple, cette température du gaz dans le stockage source et/ou de la paroi du stockage source peut être basé sur la méthode décrite dans l'une des publications suivantes :
- "The température évolution in compressed gas filling processes: A review", International Journal of Hydrogen Energy, pp 1-25, 2017 (T. Bourgeois, F. Ammouri, D. Baraldi, P. Moretto),
- "Optimization of hydrogen vehicle refuelling requirements", International Journal of Hydrogen Energy, pp 1-21, 2017 (T. Bourgeois, T. Brachmann, F. Barth, F. Ammouri, D. Zaepffel, D. Baraldi, D. Melideo),
- "Evaluating the température inside a tank during a filling with highly-pressurized gas", International Journal of Hydrogen Energy, pp 1-8, 2015 (T. Bourgeois, F. Ammouri, M. Weber, C. Knapik) .

Notamment, la modélisation de l'estimation de la température du gaz dans le stockage source et/ou de la paroi du stockage source peut être basée sur un modèle simplifié à zéro dimension (0D) pour le gaz, et une dimension (1D) paroi réservoir prenant en compte la conservation de la masse et énergie et les échanges thermiques à la paroi du stockage source pour estimer l'évolution de la température dans les réservoirs avec les variations de pression.

L'estimation peut être corrigées et/ou vérifiée (redondance) avec la mesure de la température du gaz sortant du stockage source considéré.

A noter que cette valeur de la température du gaz sortant du stockage source (ou la mesure de température à un endroit localisé de la paroi du stockage n'est pas toujours représentative du minimum de température atteint à l'intérieur du stockage source. En effet, la répartition des températures pouvant ne pas être homogène, l'utilisation d'un modèle donne des résultats plus précis.

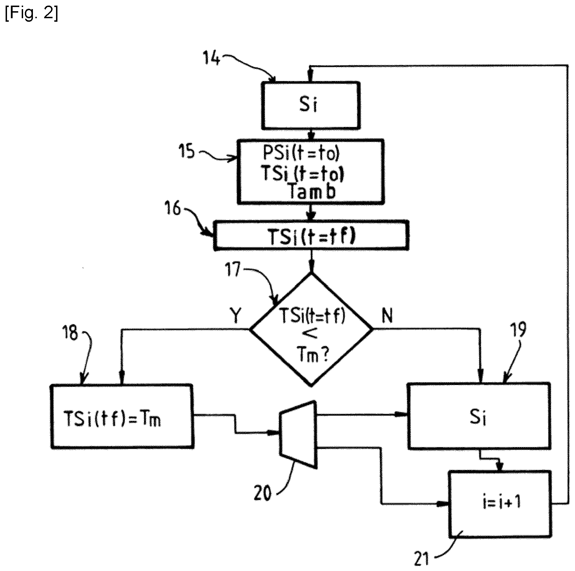

La [Fig. 2] décrit un exemple de mise en œuvre possible. Lorsqu'il est envisagé de réaliser un transfert de gaz à partir d'un premier stockage source Si (étape 14), la station peut commencer par déterminer la pression PSi(t=t0) et la température initiale TSi(t=0) du gaz dans le stockage Si source ainsi que la pression initiale dans le réservoir 2 à remplir P2(t=0) (étape 15) et de préférence également la température ambiante Tamb.

A l'étape suivante (étape 16), la température en fin de transfert (équilibrage) dans le stockage source Si peut être calculée (TSi(t=tf)) comme expliqué précédemment. Il peut être calculé également à cette occasion la pression dans le stockage source Si à l'issue de l'équilibrage PSi(t=tf) et éventuellement la pression à l'issue de l'équilibrage dans le réservoir 2.

Ensuite (étape 17), cette température du stockage source en fin de transfert TSi(t=tf) est comparée avec un seuil Tm déterminé (température minimale tolérée pour le stockage par exemple).

Si cette température du stockage source en fin de transfert TSi(t=tf) est inférieure au seuil Tm déterminée (Y), il peut être prévu dans une étape suivante de déterminer la pression du stockage source ou le temps pour lesquels cette température du stockage source atteint le seuil Tm déterminé (étape 18). Ce moment peut être défini comme la fin actualisée de l'équilibrage (c'est-à-dire que la fin de l'équilibrage peut être avancée temporellement pour éviter une baisse de température trop importante).

Dès lors, l'équilibrage peut être activé jusqu'à cette fin anticipée (étape 19). A titre d'alternative (voie alternative 20), l'étape 20 peut consister à passer au stockage source suivant dans l'ordre de pression i=i+1. C'est-à-dire que le transfert de gaz à partir du stockage en question est annulé au profit du stockage source suivant. Cette dernière alternative (étape 21) qui commute au stockage suivant i=i+1 en « sautant » le stockage courant (sans assurer de transfert de gaz) peut notamment être réalisée si le transfert avec le stockage courant serait trop court et conduirait à s'approcher trop rapidement du seuil. Ainsi, en fonction de la température du stockage source estimée, le système peut décider de ne pas lancer de transfert avec un stockage source dont la température est trop basse et qui ne pourrait transférer qu'une très faible quantité avant d'atteindre la limite basse admissible.

Le débit de soutirage (le débit de gaz transféré) peut à chaque fois être calculé et comparé au débit seuil.

Alternativement, le modèle prédictif peut tourner en temps réel sur la base des données instrumentées, notamment, la température ambiante. De même, la pression du stockage tampon et peut être initialisée dans le modèle lors de la livraison d'un nouveau semi-remorque muni de stockages source sur la base de la température ambiante. De cette façon, l'historique des stockages source est en permanence pris en compte par le système de contrôle pour déterminer un estimé de la température dans les stockages sources.

Ainsi, si à un moment quelconque, notamment lors d'un transfert de gaz, la température estimée s'approche du seuil déterminé (avec une marge de sécurité de préférence), alors le système peut basculer automatiquement vers autre stockage source.

La station 1 peut ainsi utiliser stockages source sous pression à haute pression pour remplir des réservoirs de véhicules par cascade en utilisant un système prédictif de calcul de température dans les stockages source en évitant une fragilisation de ces stockages.

Les températures successives lors des soutirages sont donc contrôlées pour éviter que les stockages source atteignent des températures inférieures à leur température minimum d'utilisation.

## Revendications

1. Station de remplissage de réservoir(s) (2) avec du gaz sous pression, notamment de l'hydrogène sous pression, comprenant au moins deux stockages source (3, 4, 5, 6) de gaz sous pression, une conduite de transfert (7) ayant une extrémité amont reliée en parallèle aux stockages sources (3, 4, 5, 6) et une extrémité aval destinée à être reliée à un réservoir (2) à remplir, la station (1) comprenant un ensemble de vanne pour contrôler le transfert de gaz entre les sources et le réservoir (2) à remplir et un contrôleur (8) électronique relié l'ensemble de vannes et configuré pour commander l'ensemble de vannes, le contrôleur (8) électronique étant configuré pour réaliser des transferts de gaz successifs entre les stockages sources (3, 4, 5, 6) et le réservoir (2) à remplir via des équilibrages de pression successifs, **caractérisée en ce que** le contrôleur (8) électronique est configuré pour déterminer la température atteinte par le gaz dans les stockages (3, 4, 5, 6) source ou par les stockages source (3, 4, 5, 6) au cours des transferts de gaz et, lorsque ladite température atteinte est inférieure à seuil déterminé, pour empêcher ou interrompre ce transfert de gaz ou pour réduire le débit de gaz transféré lors dudit transfert.

2. Station selon la revendication 1, **caractérisée en ce qu'**elle comprend un ensemble de capteurs (9) de mesure de la température du gaz dans les stockages source (3, 4, 5, 6) et **en ce que** le contrôleur (8) électronique est configuré pour déterminer la température atteinte par le gaz des stockages source ou par les stockage source au cours des transferts à partir des valeurs mesurées par les capteurs (9) de mesure de la température.

3. Station selon la revendication 1 ou 2, **caractérisé en ce qu'**elle comprend un ensemble de capteurs (10) de mesure de la pression du gaz dans les stockages source (3, 4, 5, 6) et **en ce que** le contrôleur (8) électronique est configuré pour déterminer la température atteinte par le gaz dans les stockages source ou par les stockages source au cours des transferts à partir des valeurs mesurées par les capteurs (10) de mesure de la pression.

4. Station selon l'une quelconque des revendications 1 à 3, **caractérisé en ce qu'**elle comprend un capteur (11) de mesure de la température ambiante et **en ce que** le contrôleur (8) électronique est configuré pour déterminer la température atteinte par le gaz dans les stockages source ou dans les stockages source au cours des transferts à partir de la valeur mesurée par le capteur (11) de mesure de la température ambiante.

5. Station selon l'une quelconque des revendications 1 à 4, **caractérisé en ce que** le contrôleur (8) électronique est configuré pour déterminer le débit de gaz transféré au cours des transferts et pour déterminer la température atteinte par le gaz dans les stockages source ou par les stockages source au cours des transferts à partir de ladite valeur de débit.

6. Station selon l'une quelconque des revendications 1 à 5, **caractérisé en ce que** le contrôleur (8) électronique comprend une mémoire stockant un ensemble de table(s) ou abaques de références de conditions de transfert de gaz et **en ce que** contrôleur (8) électronique est configuré pour déterminer la température atteinte par le gaz dans les stockages source ou par les stockage source au cours des transferts à partir des tables de références et des conditions de transfert de gaz courantes.

7. Station selon l'une quelconque des revendications 1 à 6, **caractérisé en ce que** le contrôleur (8) électronique est configuré pour estimer la température atteinte par le gaz dans les stockages source ou par les stockages source au cours des transferts à partir d'un modèle de calcul réalisant, avant et/ou au cours d'un transfert, un bilan de masse et d'enthalpie appliqué au gaz dans le stockage source et d'un bilan d'échange d'énergie dans la paroi du stockage source avec l'équation d'état du gaz : équation des gaz parfaits ou réels, et d'un bilan des échanges thermiques entre la paroi du stockage source et l'extérieur du stockage source.

8. Procédé de remplissage de réservoir(s) (2) avec du gaz sous pression, notamment de l'hydrogène sous pression, au moyen d'une station (1) comprenant au moins deux stockages source (3, 4, 5, 6) de gaz sous pression, une conduite de transfert (7) ayant une extrémité amont reliée en parallèle aux stockages sources (3, 4, 5, 6) et une extrémité aval destinée à être reliée à un réservoir (2) à remplir, le procédé comprenant des étapes successives de transfert de gaz entre les stockages sources (3, 4, 5, 6) et le réservoir (2) par équilibrages de pression, le procédé comprenant une étape de détermination de température atteinte par le gaz dans les stockages source ou par les stockages source au cours des transferts de gaz, une étape de comparaison de cette température atteinte avec un seuil déterminé et une étape d'empêchement ou d'interruption de ce transfert ou une étape de réduction du débit de gaz transféré lorsque ladite température atteinte est inférieure audit seuil.

9. Procédé selon la revendication 8, **caractérisé en ce qu'**il comporte une étape de mesure de la température et/ou de la pression du gaz dans les stockages source (3, 4, 5, 6) avant et/ou en cours de transfert de gaz et une étape de calcul de la température atteinte au cours du transfert à partir de la valeur mesurée de la température, respectivement de la pression.

10. Procédé selon la revendication 8 ou 9, **caractérisé en ce qu'**il comporte une étape de mesure de la température ambiante avant le transfert de gaz et une étape de calcul de la température atteinte au cours du transfert à partir de la valeur mesurée de la température ambiante.

11. Procédé selon l'une quelconque des revendications 8 à 10, **caractérisé en ce que** l'étape de détermination de température est réalisée avant ou en début de transfert de gaz et **en ce que** cette étape de détermination détermine de façon prédictive le moment du transfert de gaz au cours duquel ladite température atteint le cas échéant ledit seuil.

12. Procédé selon la revendication 11, **caractérisé en ce que**, lors des transferts de gaz, la température atteinte par le gaz dans les stockage source ou par les stockages source au cours des transferts diminue, le procédé comprenant, avant que cette température arrive au seuil, une étape d'interruption du transfert de gaz à partir du stockage source concerné et une étape de transfert de gaz à partir d'un autre stockage source.

13. Procédé selon la revendication 11, **caractérisé en ce que** l'étape de détermination de température est réalisée avant le transfert de gaz à partir d'un premier stockage source et **en ce que**, après l'étape de détermination de température, le procédé comprend une étape de détermination de la première quantité de gaz transférée par le premier stockage source vers le réservoir (2) à remplir jusqu'au moment où la température déterminée atteint le seuil et **en ce que**, lorsque cette première quantité de gaz est inférieure à une quantité déterminée, le procédé comprend une étape changement de stockage source pour transférer du gaz via un second stockage source, c'est-à-dire sans utiliser le premier stockage source pour transférer du gaz.

## Patentansprüche

1. Station zum Füllen von einem oder mehreren Behältern (2) mit unter Druck stehendem Gas, insbesondere unter Druck stehendem Wasserstoff, die mindestens zwei Quellenspeicher (3, 4, 5, 6) für unter Druck stehendes Gas beinhaltet, wobei eine Transferleitung (7) ein stromaufwärtiges Ende, das parallel mit den Quellenspeichern (3, 4, 5, 6) verbunden ist, und ein stromabwärtiges Ende, das dazu bestimmt ist, mit einem zu füllenden Behälter (2) verbunden zu werden, aufweist, wobei die Station (1) einen Satz Ventile zum Steuern des Gastransfers zwischen den Quellen und dem zu füllenden Behälter (2) und eine elektronische Steuerung (8), die mit dem Satz Ventile verbunden ist und dazu konfiguriert ist, den Satz Ventile anzusteuern, beinhaltet, wobei die elektronische Steuerung (8) dazu konfiguriert ist, aufeinanderfolgende Gastransfers zwischen den Quellenspeichern (3, 4, 5, 6) und dem zu füllenden Behälter (2) mittels aufeinanderfolgender Druckausgleichsvorgänge durchzuführen, **dadurch gekennzeichnet, dass** die elektronische Steuerung (8) dazu konfiguriert ist, die Temperatur, die durch das Gas in den Quellenspeichern (3, 4, 5, 6) oder durch die Quellenspeicher (3, 4, 5, 6) während der Gastransfers erreicht wird, zu bestimmen und, wenn die erreichte Temperatur unter einem bestimmten Schwellenwert liegt, diesen Gastransfer zu unterbinden oder zu unterbrechen oder den Durchsatz an transferiertem Gas während des Transfers zu reduzieren.

2. Station nach Anspruch 1, **dadurch gekennzeichnet, dass** sie einen Satz Sensoren (9) zur Messung der Temperatur des Gases in den Quellenspeichern (3, 4, 5, 6) beinhaltet und dass die elektronische Steuerung (8) dazu konfiguriert ist, die Temperatur, die durch das Gas der Quellenspeicher oder durch die Quellenspeicher während der Transfers erreicht wird, anhand der durch die Temperaturmesssensoren (9) gemessenen Werte zu bestimmen.

3. Station nach Anspruch 1 oder 2, **dadurch gekennzeichnet, dass** sie einen Satz Sensoren (10) zur Messung des Drucks des Gases in den Quellenspeichern (3, 4, 5, 6) beinhaltet und dass die elektronische Steuerung (8) dazu konfiguriert ist, die Temperatur, die durch das Gas in den Quellenspeichern oder durch die Quellenspeicher während der Transfers erreicht wird, anhand der durch die Druckmesssensoren (10) gemessenen Werte zu bestimmen.

4. Station nach einem beliebigen der Ansprüche 1 bis 3, **dadurch gekennzeichnet, dass** sie einen Sensor (11) zur Messung der Umgebungstemperatur beinhaltet und dass die elektronische Steuerung (8) dazu konfiguriert ist, die Temperatur, die durch das Gas in den Quellenspeichern oder in den Quellenspeichern während der Transfers erreicht wird, anhand des durch den Umgebungstemperaturmesssensor (11) gemessenen Werts zu bestimmen.

5. Station nach einem beliebigen der Ansprüche 1 bis 4, **dadurch gekennzeichnet, dass** die elektronische Steuerung (8) dazu konfiguriert ist, den Durchsatz an transferiertem Gas während der Transfers zu bestimmen und die Temperatur, die durch das Gas in den Quellenspeichern oder durch die Quellenspeicher während der Transfers erreicht wird, anhand des Durchsatzwerts zu bestimmen.

6. Station nach einem beliebigen der Ansprüche 1 bis 5, **dadurch gekennzeichnet, dass** die elektronische Steuerung (8) eine Speichereinheit beinhaltet, die einen Satz einer oder mehrerer Referenztabellen oder -nomogramme mit Gastransferbedingungen speichert, und dass die elektronische Steuerung (8) dazu konfiguriert ist, die Temperatur, die durch das Gas in den Quellenspeichern oder durch die Quellenspeicher während der Transfers erreicht wird, anhand der Referenztabellen und der aktuellen Gastransferbedingungen zu bestimmen.

7. Station nach einem beliebigen der Ansprüche 1 bis 6, **dadurch gekennzeichnet, dass** die elektronische Steuerung (8) dazu konfiguriert ist, die Temperatur, die durch das Gas in den Quellenspeichern oder durch die Quellenspeicher während der Transfers erreicht wird, anhand eines Rechenmodells zu schätzen, das vor und/oder während eines Transfers eine Massen- und Enthalpiebilanz, die auf das Gas in dem Quellenspeicher angewendet wird, und eine Bilanz des Energieaustausches in der Wand des Quellenspeichers mit der Zustandsgleichung des Gases: ideale oder reale Gasgleichung und eine Bilanz der Wärmeaustausche zwischen der Wand des Quellenspeichers und der äußeren Umgebung des Quellenspeichers durchführt.

8. Verfahren zum Füllen von einem oder mehreren Behältern (2) mit unter Druck stehendem Gas, insbesondere unter Druck stehendem Wasserstoff, mit Hilfe einer Station (1), die mindestens zwei Quellenspeicher (3, 4, 5, 6) für unter Druck stehendes Gas beinhaltet, wobei eine Transferleitung (7) ein stromaufwärtiges Ende, das parallel mit den Quellenspeichern (3, 4, 5, 6) verbunden ist, und ein stromabwärtiges Ende, das dazu bestimmt ist, mit einem zu füllenden Behälter (2) verbunden zu werden, aufweist, wobei das Verfahren aufeinanderfolgende Schritte des Transfers von Gas zwischen den Quellenspeichern (3, 4, 5, 6) und dem Behälter (2) mittels Druckausgleichsvorgängen beinhaltet, wobei das Verfahren einen Schritt des Bestimmens einer Temperatur, die durch das Gas in den Quellenspeichern oder durch die Quellenspeicher während der Gastransfers erreicht wird, einen Schritt des Vergleichens dieser erreichten Temperatur mit einem bestimmten Schwellenwert und, wenn die erreichte Temperatur unter dem Schwellenwert liegt, einen Schritt des Unterbindens oder des Unterbrechens dieses Transfers oder einen Schritt des Reduzierens des Durchsatzes an transferiertem Gas beinhaltet.

9. Verfahren nach Anspruch 8, **dadurch gekennzeichnet, dass** es einen Schritt des Messens der Temperatur und/oder des Drucks des Gases in den Quellenspeichern (3, 4, 5, 6) vor und/oder während eines Gastransfers und einen Schritt des Berechnens der während des Transfers erreichten Temperatur anhand des gemessenen Werts der Temperatur bzw. des Drucks umfasst.

10. Verfahren nach Anspruch 8 oder 9, **dadurch gekennzeichnet, dass** es einen Schritt des Messens der Umgebungstemperatur vor dem Gastransfer und einen Schritt des Berechnens der während des Transfers erreichten Temperatur anhand des gemessenen Werts der Umgebungstemperatur umfasst.

11. Verfahren nach einem beliebigen der Ansprüche 8 bis 10, **dadurch gekennzeichnet, dass** der Schritt des Bestimmens der Temperatur vor oder zu Beginn eines Gastransfers durchgeführt wird und dass dieser Schritt des Bestimmens den Moment des Gastransfers, zu dem die Temperatur den Schwellenwert ggf. erreicht, prädiktiv bestimmt.

12. Verfahren nach Anspruch 11, **dadurch gekennzeichnet, dass** während der Gastransfers die durch das Gas in den Quellenspeichern oder durch die Quellenspeicher während der Transfers erreichte Temperatur abnimmt, wobei das Verfahren, bevor diese Temperatur den Schwellenwert erreicht, einen Schritt des Unterbrechens des Gastransfers aus dem betroffenen Quellenspeicher und einen Schritt des Gastransfers aus einem anderen Quellenspeicher beinhaltet.

13. Verfahren nach Anspruch 11, **dadurch gekennzeichnet, dass** der Schritt des Bestimmens der Temperatur vor dem Gastransfer aus einem ersten Quellenspeicher durchgeführt wird und dass nach dem Schritt des Bestimmens der Temperatur das Verfahren einen Schritt des Bestimmens der ersten Menge an Gas, die bis zu dem Moment, zu dem die bestimmte Temperatur den Schwellenwert erreicht, von dem ersten Quellenspeicher zu dem zu füllenden Behälter (2) transferiert wird, beinhaltet und dass, wenn diese erste Gasmenge unter einer bestimmten Menge liegt, das Verfahren einen Schritt des Wechselns des Quellenspeichers beinhaltet, um Gas mittels eines zweiten Quellenspeichers zu transferieren, das heißt ohne den ersten Quellenspeicher für den Transfer von Gas zu verwenden.

## Claims

1. Station for filling one or more tank(s) (2) with pressurized gas, in particular pressurized hydrogen, comprising at least two pressurized gas source stores (3, 4, 5, 6), a transfer pipe (7) having an upstream end connected parallel to the source stores (3, 4, 5, 6) and a downstream end intended to be connected to a tank (2) to be filled, the station (1) comprising a valve assembly for controlling the transfer of gas between the sources and the tank (2) to be filled and an electronic controller (8) connected to the valve assembly and configured to control the valve assembly, the electronic controller (8) being configured to implement successive transfers of gas between the source stores (3, 4, 5, 6) and the tank (2) to be filled via successive pressure balancing sequences, **characterized in that** the electronic controller (8) is configured to determine the temperature attained by the gas in the source stores (3, 4, 5, 6) or by the source stores (3, 4, 5, 6) during transfers of gas and, when said attained temperature is below a determined threshold, to prevent or to interrupt this transfer of gas or to reduce the flow of gas transferred during said transfer.

2. Station according to Claim 1, **characterized in that** it comprises a set of sensors (9) for measuring the temperature of the gas in the source stores (3, 4, 5, 6), and **in that** the electronic controller (8) is configured to determine, on the basis of the values measured by the temperature measurement sensors (9), the temperature attained by the gas in the source stores or by the source stores during transfers.

3. Station according to Claim 1 or 2, **characterized in that** it comprises a set of sensors (10) for measuring the pressure of the gas in the source stores (3, 4, 5, 6), and **in that** the electronic controller (8) is configured to determine, on the basis of the values measured by the pressure measurement sensors (10), the temperature attained by the gas in the source stores or by the source stores during transfers.

4. Station according to any one of Claims 1 to 3, **characterized in that** it comprises a sensor (11) for measuring the ambient temperature, and **in that** the electronic controller (8) is configured to determine, on the basis of the value measured by the ambient temperature measurement sensor (11), the temperature attained by the gas in the source stores or in the source stores during transfers.

5. Station according to any one of Claims 1 to 4, **characterized in that** the electronic controller (8) is configured to determine the flow of gas transferred during transfers and to determine, on the basis of said flow value, the temperature attained by the gas in the source stores or by the source stores during transfers.

6. Station according to any one of Claims 1 to 5, **characterized in that** the electronic controller (8) comprises a memory storing a set of reference table(s) or charts of gas transfer conditions, and **in that** the electronic controller (8) is configured to determine, on the basis of the reference tables and the current gas transfer conditions, the temperature attained by the gas in the source stores or by the source stores during transfers.

7. Station according to any one of Claims 1 to 6, **characterized in that** the electronic controller (8) is configured to estimate, on the basis of a computation module, the temperature attained by the gas in the source stores or by the source stores during transfers, which computation module computes, before and/or during a transfer, a mass and enthalpy balance applied to the gas in the source store and an energy exchange balance in the wall of the source store with the equation of the state of the gas: equation of the ideal or real gases, and a balance of the thermal exchanges between the wall of the source store and the outside of the source store.

8. Method for filling one or more tank(s) (2) with pressurized gas, in particular pressurized hydrogen, by means of a station (1) comprising at least two pressurized gas source stores (3, 4, 5, 6), a transfer pipe (7) having an upstream end connected parallel to the source stores (3, 4, 5, 6) and a downstream end intended to be connected to a tank (2) to be filled, the method comprising successive steps of transferring gas between the source stores (3, 4, 5, 6) and the tank (2) by pressure balancing sequences, the method comprising a step of determining the temperature attained by the gas in the source stores or by the source stores during transfers of gas, a step of comparing this attained temperature with a determined threshold and a step of preventing or interrupting this transfer or a step of reducing the flow of transferred gas when said attained temperature is below said threshold.

9. Method according to Claim 8, **characterized in that** it comprises a step of measuring the temperature and/or the pressure of the gas in the source stores (3, 4, 5, 6) before and/or during the transfer of gas and a step of computing, on the basis of the measured value of the temperature, and respectively of the pressure, the temperature attained during the transfer.

10. Method according to Claim 8 or 9, **characterized in that** it comprises a step of measuring the ambient temperature before the transfer of gas and a step of computing, on the basis of the measured value of the ambient temperature, the temperature attained during the transfer.

11. Method according to any one of Claims 8 to 10, **characterized in that** the step of determining the temperature is performed before or at the start of the transfer of gas, and **in that** this determination step predictively determines the time of the transfer of gas, during which said temperature attains, if applicable, said threshold.

12. Method according to Claim 11, **characterized in that**, during transfers of gas, the temperature attained by the gas in the source stores or by the source stores during transfers decreases, the method comprising, before this temperature reaches the threshold, a step of interrupting the transfer of gas from the relevant source store and a step of transferring gas from another source store.

13. Method according to Claim 11, **characterized in that** the step of determining the temperature is performed before the gas is transferred from a first source store, and **in that**, after the step of determining the temperature, the method comprises a step of determining the first amount of gas transferred by the first source store to the tank (2) to be filled, until the time when the determined temperature attains the threshold, and **in that**, when this first amount of gas is below a determined amount, the method comprises a step of changing the source store in order to transfer the gas via a second source store, i.e. without using the first source store to transfer the gas.
